# EUROPEAN PATENT SPECIFICATION

(11) **EP 4 243 189 B1**
(45) Date of publication and mention of the grant of the patent: **29.07.2026**
(21) Application number: 21893556.7
(22) Date of filing: 17.09.2021
(51) Int. Cl.: H01M 50/51, H01M 50/574, H01M 50/578, H01M 50/581, H01M 50/583, H01M 50/249, H01M 50/503, H01M 10/42, H01H 39/00

(54) **INTELLIGENT CONNECTING SHEET, BATTERY PACK AND VEHICLE**
INTELLIGENTE VERBINDUNGSFOLIE, BATTERIEPACK UND FAHRZEUG
FEUILLE DE LIAISON INTELLIGENTE, BLOC-BATTERIE ET VÉHICULE

(30) Priority: 20.11.2020 CN 202011314702
(43) Date of publication of application: 13.09.2023
(73) Proprietor: BYD Company Limited, Shenzhen, Guangdong 518118 (CN)
(72) Inventor: ZHAO, Zhe, Shenzhen, Guangdong 518118 (CN); TAO, Naishu, Shenzhen, Guangdong 518118 (CN); PENG, Qingbo, Shenzhen, Guangdong 518118 (CN)
(74) Representative: Arnold & Siedsma
(86) International application number: PCT/CN2021/119123
(87) International publication number: WO 2022/105405

(56) References cited:
- EP-A1- 2 768 047
- EP-A1- 3 565 029
- WO-A1-2020/003801
- CN-A- 104 508 784
- CN-A- 108 780 863
- CN-U- 203 787 530
- CN-U- 203 787 530
- JP-A- 2007 018 919
- US-A1- 2012 058 382
- US-B2- 9 246 152

## Description

### FIELD

The present disclosure belongs to the technical field of new energy vehicles, and specifically, to a smart connection sheet, a battery pack, and a vehicle.

### BACKGROUND

The power source of an electric vehicle is mainly a battery pack (PACK). In a battery pack, multiple cells are connected in series to form a high-voltage circuit, so as to supply power to a motor of an electric vehicle. However, a safety risk exists in the battery pack formed by the cells connected in series. For example, phenomena such as a short-circuited battery pack may cause a risk of health damage and property losses. Therefore, safety protection needs to be provided for the battery pack.

In an existing safety protection solution for a battery pack, a safety device (a fuse) is mainly mounted in a high-voltage circuit of a battery pack. The safety device may be integrated into a safety device maintenance switch, and when the battery pack is short-circuited, the safety device fuses and breaks the high-voltage circuit of the battery pack to form voltage division.

However, the existing safety protection solution for a battery pack has the following defects:
(1). The safety device can fuse to break a short-circuit current and reduce a safety risk of battery pack voltage division only when the battery pack is short-circuited. In other safety accidents (such as violent collision, thermal runaway, overcharge, and the like), the safety device cannot automatically fuse.
(2). The safety device has a large size and occupies a large space. Because the mounting position is limited by space, the safety device usually can be mounted only in the safety device maintenance switch.
(3). When a local short circuit occurs, because the battery pack has a large quantity of strings of cells (currently, battery manufacturers have launched a solution in which hundreds of cells are connected in series), a voltage between any two terminals is still high (a direct current voltage over 60 V on a vehicle is determined as a high voltage, that is, a B-level voltage), and an electrical risk still exists.

CN 203 787 530 U discloses a circuit breaker control system for a battery assembly, wherein the battery assembly comprises a plurality of battery cells connected in series, wherein the circuit breaker control system comprises: a manual circuit breaker detachably mounted between the battery cells connected in series; a circuit breaker disposed between the battery cells in series and integrated in the manual circuit breaker, the circuit breaker being triggered by the manual circuit breaker to open the circuit and/or from the battery unit in series inter-disassembly, wherein the circuit breaker is further configured to receive a disconnection control signal sent by the vehicle safety control system external to the battery component and to open when the open circuit control signal is received. EP 2 768 047 A1 discloses a battery pack configured such that a plurality of battery modules is connected to each other in series in a state in which the battery modules are in tight contact with each other or stacked adjacent to each other, the battery pack being fixed such that a stacked state of the battery modules is maintained even when volume of the battery modules is changed during charge and discharge of the battery modules, the battery pack comprising: a cut-off portion connected in series to an electrical connection circuit between the battery modules; a fixing member to fix a circuit breaker to at least one outer surface of the battery pack; and the circuit breaker configured to be electrically conducted when an outer surface of at least one battery module expands by a reference volume value or more, the circuit breaker being connected in series to the electrical connection circuit to short-circuit the cut-off portion when electric conduction is performed due to swelling of the battery modules. US 9 246 152 B2 discloses a battery pack having a plurality of electrically connected battery modules, the battery pack comprising an electrode terminal connecting device, wherein the electrode terminal connecting device comprises: a conductive connecting member coupled to electrode terminals of the battery modules to electrically connect the electrode terminals of the battery modules to each other, the conductive connecting member including opposite ends that protrude to form steps having a predetermined height, and a channel disposed between the opposite ends; an insulative sheathing member coupleable to the conductive connecting member and surrounding the conductive connecting member, the insulative sheathing member including at least one coupling member on an inside thereof having a tapered structure for securing to an opposite end of the conductive connecting member, and being open at a rear thereof to expose a region of the conductive connecting member between the opposite ends; and a shut-off cutter mounted to the conductive connecting member to shut off a circuit of the conductive connecting member when impact is applied to the battery pack in a longitudinal direction of the battery pack, the shut-off cutter being disposed adjacent the channel; wherein the shut-off cutter physically cuts the conductive connecting member when impact is applied to the battery pack in the longitudinal direction of the battery pack; and wherein the conductive connecting member is configured so that an upper end portion and a lower end portion of a region thereof corresponding to the shut-off cutter are depressed inward to a predetermined depth.

### SUMMARY

A technical problem to be resolved in the present disclosure is as follows. In the existing safety protection solution using a safety device for a battery pack, the safety device has a large size and occupies a large space. For this problem, a smart connection sheet, a battery pack, and a vehicle are provided.

To resolve the foregoing technical problem, according to an aspect, an example of the present disclosure provides a smart connection sheet, including a conductive connection member and a cut-off apparatus. An end of the conductive connection member is connected to a terminal of a cell of a battery pack, and an other end of the conductive connection member is connected to a terminal of another adjacent cell of the battery pack, to implement a series connection between the two adjacent cells in the battery pack.

When receiving a cut-off signal, the cut-off apparatus cuts off the conductive connection member, to disconnect the two cells connected to the conductive connection member.

According to an example of the present disclosure, the conductive connection member has a weakened area, and when receiving the cut-off signal, the cut-off apparatus cuts off the conductive connection member along the weakened area.

According to an example of the present disclosure, the cut-off apparatus is electrically connected to a battery management system. The battery management system sends the cut-off signal to the cut-off apparatus when determining, through detecting a voltage, current, or temperature change signal of the battery pack, that a safety accident occurs to the battery pack. The safety accident includes one or more of violent collision, thermal runaway, a short circuit, or overcharge.

According to an example of the present disclosure, the cut-off apparatus includes a driving apparatus and a punch. When receiving the cut-off signal, the cut-off apparatus drives, through the driving apparatus, the punch to move toward the conductive connection member, to cut off the conductive connection member through the punch.

According to an example of the present disclosure, the cut-off apparatus further includes a housing, and the driving apparatus is a gas generator. The punch includes a cylindrical portion having an open end and a closed end, and a cutter head connected to the closed end of the cylindrical portion. The housing is internally provided with a guide hole, and the cylindrical portion is slidably arranged in the guide hole. The gas generator is accommodated in the cylindrical portion and is connected to an ignition power supply through a signal cable.

When ignited, gunpowder in the gas generator impacts on the punch, and the punch moves in an axial direction of the guide hole toward the conductive connection member, to cut off the conductive connection member through the cutter head.

According to an example of the present disclosure, the housing is internally provided with a movement cavity that is in communication with an end of the guide hole close to the conductive connection member, and a conductive connection member accommodating cavity surrounding the movement cavity. The cutter head is located in the movement cavity, and the conductive connection member is inserted into the conductive connection member accommodating cavity.

The conductive connection member includes a first connection plate, a second connection plate, and an intermediate connection plate connected between the first connection plate and the second connection plate. The first connection plate and the second connection plate respectively extend out of the housing from two opposite sides. The first connection plate is connected to the terminal of one of the two cells, the second connection plate is connected to the terminal of the other cell, and a to-be-cut-off part of the intermediate connection plate is located in the movement cavity.

In an initial state, the movement cavity is divided by the intermediate connection plate into a first cavity and a second cavity, and the cutter head is located in the first cavity. After the cutter head cuts off the conductive connection member, the second cavity accommodates a cut-off part of the conductive connection member.

According to an example of the present disclosure, a part of the conductive connection member is thinned to form the weakened area; or
a weakening score is provided on the conductive connection member to form the weakened area; or
a part of the conductive connection member is made of a material with less strength than that of a peripheral part to form the weakened area.

The smart connection sheet according to this example of the present disclosure includes a conductive connection member and a cut-off apparatus. An end of the conductive connection member is connected to a terminal of a cell of a battery pack, and an other end of the conductive connection member is connected to a terminal of another adjacent cell of the battery pack, to implement a series connection between the two adjacent cells in the battery pack. When receiving a cut-off signal, the cut-off apparatus cuts off the conductive connection member, to disconnect the two cells connected to the conductive connection member. In the present disclosure, the smart connection sheet can be used between some cells of the battery pack to replace a conventional metal connection sheet (the smart connection sheet and the conventional metal connection sheet have a small difference in size). The cut-off apparatus cuts off the conductive connection member of the smart connection sheet to break the high-voltage circuit of the battery pack, to provide safety protection for the battery pack. Compared with the safety device in the related art, the smart connection sheet has a smaller size, and can be placed between any two adjacent cells of the battery pack. The smart connection sheet has a flexible placing position, occupies a small space, and has a lower cost compared with the maintenance switch.

In addition, the battery management system (BMS) controls the cut-off apparatus to cut off the conductive connection member, to automatically cut off the high-voltage connection of the battery pack. In this way, the battery pack has a function of automatically protecting safety of the high-voltage circuit, thereby improving safety performance of the battery pack. Certainly, a controller independent of the battery management system may also be used to control the operation of the cut-off apparatus.

According to another aspect, an example of the present disclosure provides a battery pack, including the foregoing smart connection sheet.

According to an example of the present disclosure, multiple smart connection sheets are provided. When conductive connection members of the multiple smart connection sheets are cut off by cut-off apparatuses, a high-voltage circuit of the battery pack is divided into multiple sections of voltage division circuits, and a voltage of each section of voltage division circuit is below a safety voltage.

In this way, multiple smart connection sheets can be mounted in a pack body. When the conductive connection members of the multiple smart connection sheets are cut off by the cut-off apparatuses, the high-voltage circuit of the battery pack is divided into multiple sections of voltage division circuits, and the voltage of each section of voltage division circuit can be lowered below the safety voltage. For example, when two smart connection sheets are arranged in a battery pack, after the two smart connection sheets are cut off, a high-voltage circuit is changed into three sections of voltage division circuits, thereby implementing multi-section voltage division of the battery pack. Therefore, the voltage of the battery pack is controlled within a safety range, and the safety performance of the battery pack is improved.

According to still another aspect, an example of the present disclosure provides a vehicle, including the foregoing smart connection sheet or the foregoing battery pack.

### BRIEF DESCRIPTION OF THE DRAWINGS

FIG. 1 is a schematic structural diagram of a battery pack according to an example of the present disclosure.
FIG. 2 is a schematic electrical diagram of a battery pack according to an example of the present disclosure.
FIG. 3 is a schematic diagram of an external structure of a smart connection sheet according to an example of the present disclosure.
FIG. 4 is a schematic diagram of an internal structure of a smart connection sheet (in an initial state) according to an example of the present disclosure.
FIG. 5 is a diagram of a working principle of a smart connection sheet according to an example of the present disclosure.

The reference numerals in the specification are as follows:
1. cell;
2. smart connection sheet; 21. conductive connection member; 211. first connection plate; 212. second connection plate; 213. intermediate connection plate; 214. weakened area; 22. cut-off apparatus; 221. punch; 2211. cylindrical portion; 2212. cutter head; 222. housing; 2221. guide hole; 2222. movement cavity; 22221. first cavity; 22222. second cavity; 2223. conductive connection member accommodating cavity; 223. gas generator; 224. signal cable;
3. metal connection sheet;
4. end plate;
5. side plate; and
6. battery management system.

### DETAILED DESCRIPTION

To make the technical problem resolved by the present disclosure, technical solutions, and advantageous effects clearer and more comprehensible, the following further describes the present disclosure in detail with reference to the accompanying drawings and examples. It should be understood that, the specific examples described herein are merely used for explaining the present disclosure instead of limiting the present disclosure. The invention is defined in the appended claims.

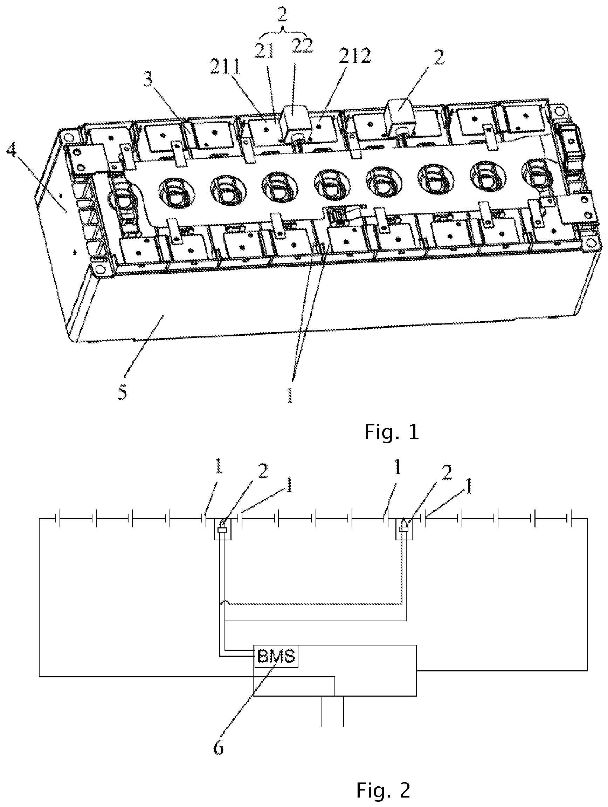

As shown in FIG. 1 and FIG. 2, a battery pack provided in an example of the present disclosure includes multiple cells 1 connected in series and smart connection sheets 2.

In an example, the smart connection sheet 2 includes a conductive connection member 21 and a cut-off apparatus 22. An end of the conductive connection member 21 is connected to a terminal of a cell 1 of the battery pack, and an other end of the conductive connection member 21 is connected to a terminal of another adjacent cell 1 of the battery pack, to implement a series connection between the two adjacent cells 1 in the battery pack.

As shown in FIG. 1, the multiple cells 1 are stacked in a width direction thereof to form a battery stack. Two sides of the battery stack in a length direction are provided with end plates 4, and two sides of the battery stack in a width direction are provided with side plates 5. In the multiple cells 1, some are connected in series through the smart connection sheets 2, and the remaining are connected in series through conventional metal connection sheets 3.

When receiving a cut-off signal, the cut-off apparatus 22 cuts off the conductive connection member 21, to disconnect the two cells 1 connected to the conductive connection member 21. The conductive connection member 21 is a metal plate or another conductive object.

In an example, the cut-off apparatus 22 is electrically connected to a battery management system (BMS) 6. The battery management system 6 sends the cut-off signal to the cut-off apparatus 22 when determining, through detecting a voltage, current, or temperature change signal of the battery pack, that a safety accident occurs to the battery pack. The safety accident includes one or more of violent collision, thermal runaway, a short circuit, or overcharge. For example, when a temperature rising rate of a monitored point in the battery pack dT/dt≥1°C/s (specific data may change according to a control policy), and lasts for over 3s, it may be considered that thermal runaway occurs to the battery pack. For another example, when a circuit current of the battery pack far exceeds a rated current, it may be considered that the battery pack is short-circuited.

The battery management system 6 may detect a voltage signal of the battery pack through a battery information collector (BIC). The battery management system 6 may detect a temperature signal of the battery pack through NTC (a thermistor), and may detect a current signal through a Hall sensor.

In an example, the cut-off apparatus 22 includes a driving apparatus and a punch 221. When receiving the cut-off signal, the cut-off apparatus 22 drives, through the driving apparatus, the punch 221 to move toward the conductive connection member 21, to cut off the conductive connection member 21 through the punch 221.

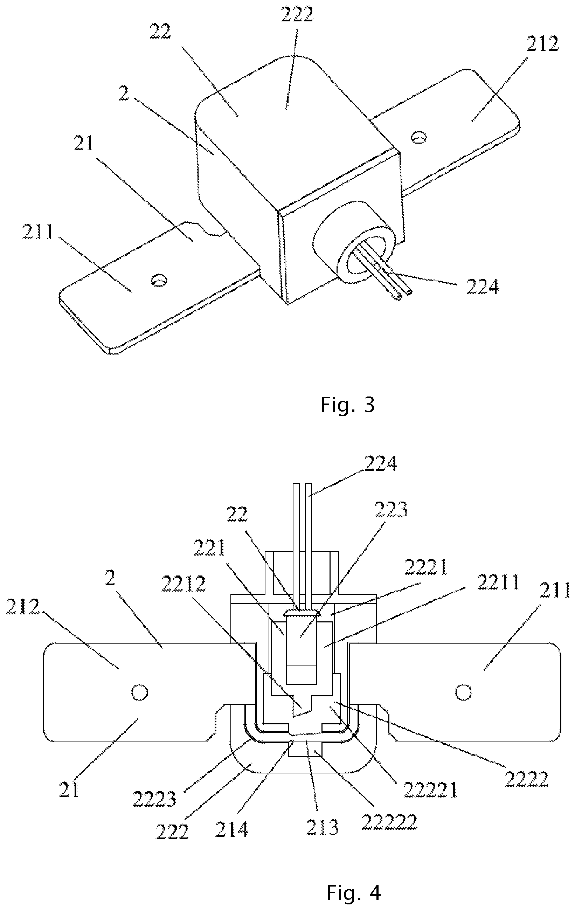

In an example, as shown in FIG. 3 and FIG. 4, the cut-off apparatus 22 further includes a housing 222. The driving apparatus is a gas generator 223 and the gas generator 223 includes a gunpowder storehouse and gunpowder stored in the gunpowder storehouse. The punch 221 includes a cylindrical portion 2211 having an open end and a closed end, and a cutter head 2212 connected to the closed end of the cylindrical portion 2211. The housing 222 is internally provided with a guide hole 2221, and the cylindrical portion 2211 is slidably arranged in the guide hole 2221. The gas generator 223 is accommodated in the cylindrical portion 2211 and is connected to an ignition power supply through a signal cable 224. When ignited, the gunpowder in the gas generator 223 impacts on the punch 221. and the punch 221 moves in an axial direction of the guide hole 2221 toward the conductive connection member 21, to cut off the conductive connection member 21 through the cutter head 2212.

In an example, the housing 222 is internally provided with a movement cavity 2222 that is in communication with an end of the guide hole 2221 close to the conductive connection member 21, and a conductive connection member accommodating cavity 2223 surrounding the movement cavity 2222. The cutter head 2212 is located in the movement cavity 2222, and the conductive connection member 21 is inserted into the conductive connection member accommodating cavity 2223.

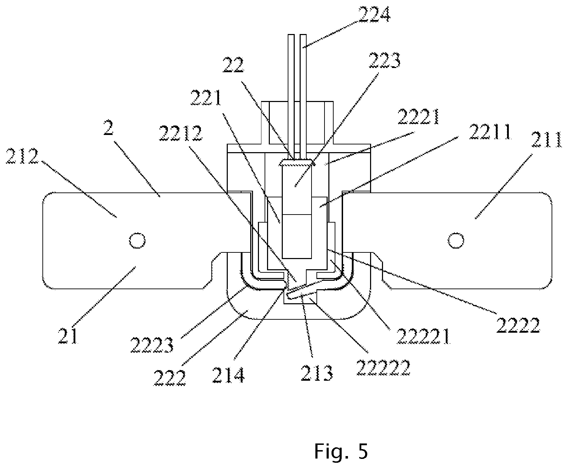

In an example, as shown in FIG. 1, FIG. 3, and FIG. 4, the conductive connection member 21 includes a first connection plate 211, a second connection plate 212, and an intermediate connection plate 213 connected between the first connection plate 211 and the second connection plate 212. The first connection plate 211 and the second connection plate 212 respectively extend out of the housing 222 from two opposite sides. The first connection plate 211 is connected to the terminal of one of the two cells 1, the second connection plate 212 is connected to the terminal of the other cell 1, and a to-be-cut-off part of the intermediate connection plate 213 is located in the movement cavity 2222. Referring to FIG. 5, in an initial state, the movement cavity 2222 is divided by the intermediate connection plate 213 into a first cavity 22221 and a second cavity 22222, and the cutter head 2212 is located in the first cavity 22221. After the cutter head 2212 cuts off the conductive connection member 21, the second cavity 22222 can accommodate a cut-off part (the intermediate connection plate 213) of the conductive connection member 21 and avoid the cutter head 2212.

Referring to FIG. 1, the first connection plate 211 covers a top surface of the one of the two cells 1, and the second connection plate 212 covers a top surface of the other cell 1. The first connection plate 211 and the second connection plate 212 are connected to the terminals of the cells 1 by welding. Optionally, the first connection plate 211 and the second connection plate 212 are provided with a welding hole for being connected to the terminals by welding.

In an example, the conductive connection member 21 has a weakened area 214, and when receiving the cut-off signal, the cut-off apparatus 22 cuts off the conductive connection member 21 along the weakened area 214.

In an example, referring to FIG. 4, a part (the intermediate connection plate 213) of the conductive connection member 21 is thinned to form the weakened area 214.

However, alternatively, a weakening score may also be provided on the conductive connection member to form the weakened area; or a part of the conductive connection member is made of a material with less strength than that of a peripheral part to form the weakened area.

In an optional example, multiple smart connection sheets 2 are provided. When conductive connection members 21 of the multiple smart connection sheets 2 are cut off by cut-off apparatuses 22, a high-voltage circuit of the battery pack is divided into multiple sections of voltage division circuits, and a voltage of each section of voltage division circuit is below a safety voltage. In this way, multiple smart connection sheets 2 can be mounted in a pack body. When the conductive connection members 21 of the multiple smart connection sheets 2 are cut off by the cut-off apparatuses 22, the high-voltage circuit of the battery pack is divided into multiple sections of voltage division circuits, and the voltage of each section of voltage division circuit can be lowered below the safety voltage. For example, referring to FIG. 2, when two smart connection sheets 2 are arranged in a battery pack, after the two smart connection sheets 2 are cut off, a high-voltage circuit is changed into three sections of voltage division circuits, thereby implementing multi-section voltage division of the battery pack. Therefore, the voltage of the battery pack is controlled within a safety range, and the safety performance of the battery pack is improved.

Referring to FIG. 4 and FIG. 5, a working principle of the smart connection sheet of this example of the present disclosure is as follows:

When the battery management system 6 determines that a safety accident (violent collision, thermal runaway, a short circuit, or overcharge) occurs to the battery pack, the battery management system 6 sends, to the cut-off apparatus 22 (the gas generator 223), a cut-off signal (usually a voltage signal) for cutting off the conductive connection member 21 of the smart connection sheet 2 and triggers a current to ignite the gunpowder in the gas generator 223 through the signal cable. Gunpowder explosion provides thrust for the punch 221, and the punch 221 is thrust toward a weak area (the weakened area 214) of the conductive connection member 21 under the impact of gunpowder explosion. The cutter head 2212 cuts off the conductive connection member 21 along the weakened area 214, and the conductive connection member 21 is cut off from the middle. The high-voltage circuit of the battery pack formed through connection by the conductive connection member 21 is broken at the conductive connection member 21, to form voltage division.

The smart connection sheet and the battery pack according to this example of the present disclosure includes a conductive connection member and a cut-off apparatus. An end of the conductive connection member is connected to a terminal of a cell of a battery pack, and an other end of the conductive connection member is connected to a terminal of another adjacent cell of the battery pack, to implement a series connection between the two adjacent cells in the battery pack. When receiving a cut-off signal, the cut-off apparatus cuts off the conductive connection member, to disconnect the two cells connected to the conductive connection member. In the present disclosure, the smart connection sheet can be used between some cells of the battery pack to replace a conventional metal connection sheet (referring to FIG. 1, the smart connection sheet and the conventional metal connection sheet have a small difference in size). The cut-off apparatus cuts off the conductive connection member of the smart connection sheet to break the high-voltage circuit of the battery pack, to provide safety protection for the battery pack. Compared with the safety device in the related art, the smart connection sheet has a smaller size, and can be placed between any two adjacent cells of the battery pack. The smart connection sheet has a flexible placing position, occupies a small space, and has a lower cost compared with the maintenance switch.

In addition, the battery management system (BMS) controls the cut-off apparatus to cut off the conductive connection member, to automatically cut off the high-voltage connection of the battery pack. In this way, the battery pack has a function of automatically protecting safety of the high-voltage circuit, thereby improving safety performance of the battery pack. Certainly, a controller independent of the battery management system may also be used to control the operation of the cut-off apparatus.

In another example, the driving apparatus of the cut-off apparatus may also be replaced with a servo electric cylinder, a hydraulic cylinder, a pneumatic cylinder, or the like.

In addition, an example of the present disclosure provides a vehicle, including the smart connection sheet 2 in the foregoing example or the battery pack in the foregoing example.

## Claims

1. A smart connection sheet (2), comprising a conductive connection member (21) and a cut-off apparatus (22), wherein an end of the conductive connection member (21) is adapted to connect to a terminal of a cell of a battery pack, and an other end of the conductive connection member (21) is adapted to connect to a terminal of an adjacent cell of the battery pack, to implement a series connection between the two adjacent cells in the battery pack; and
when receiving a cut-off signal, the cut-off apparatus (22) is configured to cut off the conductive connection member (21), to disconnect the two cells connected to the conductive connection member (21),
**characterised in that** the conductive connection member (21) has a weakened area (214), and when receiving the cut-off signal, the cut-off apparatus (22) is configured to cut off the conductive connection member (21) along the weakened area (214), and **in that**
the weakened area (214) is an area formed with a weakening score of the conductive connection member (21); or the weakened area (214) is a part of the conductive connection member (21) made of a material with less strength than that of a peripheral part.

2. The smart connection sheet (2) according to claim 1, wherein the cut-off apparatus (22) is configured to be electrically connected to a battery management system (6), and the battery management system (6) is configured to send the cut-off signal to the cut-off apparatus (22) when determining, through detecting a voltage, current, or temperature change signal of the battery pack, that a safety accident occurs to the battery pack; and the safety accident comprises one or more of violent collision, thermal runaway, a short circuit, or overcharge.

3. The smart connection sheet (2) according to any of claims 1 to 2, wherein the cut-off apparatus (22) comprises a driving apparatus and a punch (221), and when receiving the cut-off signal, the cut-off apparatus (22) is configured to drive, through the driving apparatus, the punch (221) to move toward the conductive connection member (21), to cut off the conductive connection member (21) through the punch (221).

4. The smart connection sheet (2) according to claim 3, wherein the cut-off apparatus (22) further comprises a housing (222), and the driving apparatus is a gas generator (223); the punch (221) comprises a cylindrical portion (2211) having an open end and a closed end, and a cutter head (2212) connected to the closed end of the cylindrical portion (2211), the housing (222) is internally provided with a guide hole (2221), the cylindrical portion (2211) is slidably arranged in the guide hole (2221), and the gas generator (223) is accommodated in the cylindrical portion (2211) and is connected to an ignition power supply through a signal cable (224); and
when ignited, gunpowder in the gas generator (223) is configured to impact on the punch (221), and the punch (221) is configured to move in an axial direction of the guide hole (2221) toward the conductive connection member (21), to cut off the conductive connection member (21) through the cutter head (2212).

5. The smart connection sheet (2) according to claim 4, wherein the housing (222) is internally provided with a movement cavity (2222) that is in communication with an end of the guide hole (2221) close to the conductive connection member (21), and a conductive connection member (21) accommodating cavity surrounding the movement cavity (2222), the cutter head (2212) is located in the movement cavity (2222), and the conductive connection member (21) is inserted into the conductive connection member (21) accommodating cavity;
the conductive connection member (21) comprises a first connection plate (211), a second connection plate (212), and an intermediate connection plate (213) connected between the first connection plate (211) and the second connection plate (212), the first connection plate (211)and the second connection plate (212) respectively extend out of the housing (222) from two opposite sides, the first connection plate (211) is configured to connect to the terminal of one of the two cells, the second connection plate (212) is configured to connect to the terminal of the other cell, and a to-be-cut-off part of the intermediate connection plate (213) is located in the movement cavity (2222);
in an initial state, the movement cavity (2222) is divided by the intermediate connection plate (213) into a first cavity (22221) and a second cavity, and the cutter head (2212) is located in the first cavity (22221); and after the cutter head (2212) cuts off the conductive connection member (21), the second cavity accommodates a cut-off part of the conductive connection member (21).

6. The smart connection sheet (2) according to claim 1, wherein the weakened area (214) is a thinned part of the conductive connection member (21).

7. A battery pack, comprising the smart connection sheet (2) according to any one of claims 1 to 6.

8. The battery pack according to claim 7, wherein the battery pack comprises a plurality of smart connection sheets (2), wherein when conductive connection members (21) of the plurality of smart connection sheets (2) are cut off by cut-off apparatuses (22), a high-voltage circuit of the battery pack is configured to be divided into a plurality of sections of voltage division circuits, and a voltage of each section of voltage division circuit is below a safety voltage.

9. A vehicle, comprising the smart connection sheet (2) according to any one of claims 1 to 6 or the battery pack according to claim 7 or 8.

## Patentansprüche

1. Intelligente Verbindungsfolie (2), umfassend ein leitfähiges Verbindungselement (21) und eine Abtrenneinrichtung (22), wobei ein Ende des leitfähigen Verbindungselements (21) angepasst ist, um mit einem Anschluss einer Zelle eines Batteriepakets verbunden zu werden, und ein anderes Ende des leitfähigen Verbindungselements (21) angepasst ist, um mit einem Anschluss einer benachbarten Zelle des Batteriepakets verbunden zu werden, um eine Reihenschaltung zwischen den zwei benachbarten Zellen in dem Batteriepaket zu implementieren; und
wobei beim Empfangen eines Abtrennsignals die Abtrenneinrichtung (22) konfiguriert ist, um das leitfähige Verbindungselement (21) abzutrennen, um die zwei Zellen, die mit dem leitfähigen Verbindungselement (21) verbunden sind, zu trennen,
**dadurch gekennzeichnet, dass** das leitfähige Verbindungselement (21) einen geschwächten Bereich (214) aufweist, und beim Empfangen des Abtrennsignals die Abtrenneinrichtung (22) konfiguriert ist, um das leitfähige Verbindungselement (21) entlang des geschwächten Bereichs (214) abzutrennen, und **dadurch, dass**
der geschwächte Bereich (214) ein Bereich ist, der mit einem Schwächungsbewerter des leitfähigen Verbindungselements (21) ausgebildet ist; oder der geschwächte Bereich (214) ein Teil des leitfähigen Verbindungselements (21) ist, das aus einem Material mit geringerer Festigkeit als der eines peripheren Teils gefertigt ist.

2. Intelligente Verbindungsfolie (2) nach Anspruch 1, wobei die Abtrenneinrichtung (22) konfiguriert ist, um mit einem Batteriemanagementsystem (6) elektrisch verbunden zu sein, und das Batteriemanagementsystem (6) konfiguriert ist, um das Abtrennsignal an die Abtrenneinrichtung (22) zu senden, beim Bestimmen, durch Erfassen eines Spannungs-, Strom- oder Temperaturänderungssignals des Batteriepakets, dass ein Sicherheitsunfall bei dem Batteriepaket auftritt; und der Sicherheitsunfall eines oder mehreres von gewaltsamer Kollision, thermischem Durchgehen, einem Kurzschluss oder Überladung umfasst.

3. Intelligente Verbindungsfolie (2) nach einem der Ansprüche 1 bis 2, wobei die Abtrenneinrichtung (22) eine Antriebseinrichtung und einen Stempel (221) umfasst, und beim Empfangen des Abtrennsignals die Abtrennvorrichtung (22) konfiguriert ist, um durch die Antriebseinrichtung den Stempel (221) anzutreiben, um sich zu dem leitfähigen Verbindungselement (21) hin zu bewegen, um das leitfähige Verbindungselement (21) durch den Stempel (221) abzutrennen.

4. Intelligente Verbindungsfolie (2) nach Anspruch 3, wobei die Abtrenneinrichtung (22) ferner ein Gehäuse (222) umfasst, und die Antriebseinrichtung ein Gasgenerator (223) ist; der Stempel (221) einen zylindrischen Abschnitt (2211), der ein offenes Ende und ein geschlossenes Ende aufweist, und einen Schneidkopf (2212), der mit dem geschlossenen Ende des zylindrischen Abschnitts (2211) verbunden ist, umfasst, das Gehäuse (222) mit einem Führungsloch (2221) intern bereitgestellt wird, der zylindrische Abschnitt (2211) in dem Führungsloch (2221) gleitend angeordnet ist, und der Gasgenerator (223) in dem zylindrischen Abschnitt (2211) aufgenommen ist und mit einer Zündungsleistungsversorgung durch ein Signalkabel (224) verbunden ist; und
wenn gezündet, Treibladungspulver in dem Gasgenerator (223) konfiguriert ist, um auf den Stempel (221) einzuwirken, und der Stempel (221) konfiguriert ist, um sich in einer axialen Richtung des Führungslochs (2221) zu dem leitfähigen Verbindungselement (21) hin zu bewegen, um das leitfähige Verbindungselement (21) durch den Schneidkopf (2212) abzutrennen.

5. Intelligente Verbindungsfolie (2) nach Anspruch 4, wobei das Gehäuse (222) intern mit einem Bewegungshohlraum (2222), der in Verbindung mit einem Ende des Führungslochs (2221) nahe dem leitfähigen Verbindungselement (21) steht, und einem das leitfähige Verbindungselement (21) aufnehmenden Hohlraum, der den Bewegungshohlraum (2222) umgibt, bereitgestellt ist, wobei sich der Schneidkopf (2212) in dem Bewegungshohlraum (2222) befindet, und das leitfähige Verbindungselement (21) in den das leitfähige Verbindungselement (21) aufnehmenden Hohlraum eingeführt ist;
wobei das leitfähige Verbindungselement (21) eine erste Verbindungsplatte (211), eine zweite Verbindungsplatte (212) und eine Zwischenverbindungsplatte (213) umfasst, die zwischen der ersten Verbindungsplatte (211) und der zweiten Verbindungsplatte (212) verbunden ist, wobei sich die erste Verbindungsplatte (211) und die zweite Verbindungsplatte (212) jeweils aus dem Gehäuse (222) von zwei gegenüberliegenden Seiten erstrecken, die erste Verbindungsplatte (211) konfiguriert ist, um mit dem Anschluss einer der zwei Zellen verbunden zu werden, die zweite Verbindungsplatte (212) konfiguriert ist, um mit dem Anschluss der anderen Zelle verbunden zu werden, und sich ein abzutrennender Teil der Zwischenverbindungsplatte (213) in dem Bewegungshohlraum (2222) befindet;
wobei in einem Anfangszustand, der Bewegungshohlraum (2222) durch die Zwischenverbindungsplatte (213) in einen erste Hohlraum (22221) und einen zweiten Hohlraum unterteilt ist, und sich der Schneidkopf (2212) in dem ersten Hohlraum (22221) befindet; und nachdem der Schneidkopf (2212) das leitfähige Verbindungselement (21) abtrennt, der zweite Hohlraum einen abgeschnittenen Teil des leitfähigen Verbindungselements (21) aufnimmt.

6. Intelligente Verbindungsfolie (2) nach Anspruch 1, wobei der geschwächte Bereich (214) ein verdünnter Teil des leitfähigen Verbindungselements (21) ist.

7. Batteriepaket, umfassend die intelligente Verbindungsfolie (2) nach einem der Ansprüche 1 bis 6.

8. Batteriepaket nach Anspruch 7, wobei das Batteriepaket eine Vielzahl von intelligenten Verbindungsfolien (2) umfasst, wobei, wenn leitfähige Verbindungselemente (21) der Vielzahl von intelligenten Verbindungsblechen (2) durch Abtrenneinrichtungen (22) abgetrennt werden, ein Hochspannungskreis des Batteriepakets konfiguriert ist, um in eine Vielzahl von Anteilen von Spannungsteilungskreisen unterteilt zu werden, und eine Spannung jedes Anteils des Spannungsteilungskreises unter einer Sicherheitsspannung liegt.

9. Fahrzeug, umfassend die intelligente Verbindungsfolie (2) nach einem der Ansprüche 1 bis 6 oder das Batteriepaket nach Anspruch 7 oder 8.

## Revendications

1. Feuille de connexion intelligente (2), comprenant un élément de connexion conducteur (21) et un appareil de découpe (22), dans laquelle une extrémité de l'élément de connexion conducteur (21) est adaptée pour se connecter à une borne d'une cellule d'un bloc-batterie, et une autre extrémité de l'élément de connexion conducteur (21) est adaptée pour se connecter à une borne d'une cellule adjacente du bloc-batterie, pour mettre en œuvre une connexion en série entre les deux cellules adjacentes dans le bloc-batterie ; et
lors de la réception d'un signal de découpe, l'appareil de découpe (22) est conçu pour découper l'élément de connexion conducteur (21), pour déconnecter les deux cellules connectées à l'élément de connexion conducteur (21),
**caractérisée en ce que** l'élément de connexion conducteur (21) a une zone affaiblie (214), et lors de la réception du signal de découpe, l'appareil de découpe (22) est conçu pour découper l'élément de connexion conducteur (21) le long de la zone affaiblie (214), et **en ce que**
la zone affaiblie (214) est une zone formée avec une entaille d'affaiblissement de l'élément de connexion conducteur (21) ; ou la zone affaiblie (214) est une partie de l'élément de connexion conducteur (21) constitué d'un matériau de résistance moindre que celui d'une partie périphérique.

2. Feuille de connexion intelligente (2) selon la revendication 1, dans laquelle l'appareil de découpe (22) est conçu pour être connecté électriquement à un système de gestion de batterie (6), et le système de gestion de batterie (6) est conçu pour envoyer le signal de découpe à l'appareil de découpe (22) lors de la détermination, par la détection d'un signal de changement de tension, de courant ou de température du bloc-batterie, qu'un accident de sécurité se produit sur le bloc-batterie ; et l'accident de sécurité comprend un ou plusieurs parmi collision violente, emballement thermique, court-circuit ou surcharge.

3. Feuille de connexion intelligente (2) selon l'une quelconque des revendications 1 à 2, dans laquelle l'appareil de découpe (22) comprend un appareil d'entraînement et un poinçon (221), et lors de la réception du signal de découpe, l'appareil de découpe (22) est conçu pour entraîner, par l'appareil d'entraînement, le poinçon (221) à se déplacer vers l'élément de connexion conducteur (21), pour découper l'élément de connexion conducteur (21) par le poinçon (221).

4. Feuille de connexion intelligente (2) selon la revendication 3, dans laquelle l'appareil de découpe (22) comprend en outre un logement (222), et l'appareil d'entraînement est un générateur de gaz (223) ; le poinçon (221) comprend une partie cylindrique (2211) ayant une extrémité ouverte et une extrémité fermée, et une tête de dispositif de découpe (2212) reliée à l'extrémité fermée de la partie cylindrique (2211), le logement (222) est pourvu à l'intérieur d'un trou de guidage (2221), la partie cylindrique (2211) est agencée de manière coulissante dans le trou de guidage (2221), et le générateur de gaz (223) est reçu dans la partie cylindrique (2211) et est connecté à une alimentation en puissance d'allumage par un câble de signal (224) ; et
lorsqu'elle est allumée, la poudre à canon dans le générateur de gaz (223) est conçue pour avoir un impact sur le poinçon (221), et le poinçon (221) est conçu pour se déplacer dans une direction axiale du trou de guidage (2221) vers l'élément de connexion conducteur (21), pour découper l'élément de connexion conducteur (21) par la tête de dispositif de découpe (2212).

5. Feuille de connexion intelligente (2) selon la revendication 4, dans laquelle le logement (222) est pourvu à l'intérieur d'une cavité de déplacement (2222) qui est en communication avec une extrémité du trou de guidage (2221) proche de l'élément de connexion conducteur (21), et d'une cavité de réception d'élément de connexion conducteur (21) entourant la cavité de déplacement (2222), la tête de dispositif de découpe (2212) est située dans la cavité de déplacement (2222), et l'élément de connexion conducteur (21) est inséré dans la cavité de réception d'élément de connexion conducteur (21) ;
l'élément de connexion conducteur (21) comprend une première plaque de connexion (211), une seconde plaque de connexion (212), et une plaque de connexion intermédiaire (213) connectée entre la première plaque de connexion (211) et la seconde plaque de connexion (212), la première plaque de connexion (211) et la seconde plaque de connexion (212) s'étendent respectivement hors du logement (222) à partir de deux côtés opposés, la première plaque de connexion (211) est conçue pour se connecter à la borne de l'une des deux cellules, la seconde plaque de connexion (212) est conçue pour se connecter à la borne de l'autre cellule, et une partie à découper de la plaque de connexion intermédiaire (213) est située dans la cavité de déplacement (2222) ;
dans un état initial, la cavité de déplacement (2222) est divisée par la plaque de connexion intermédiaire (213) en une première cavité (22221) et une seconde cavité, et la tête de dispositif de découpe (2212) est située dans la première cavité (22221) ; et après que la tête de dispositif de découpe (2212) a découpé l'élément de connexion conducteur (21), la seconde cavité reçoit une partie découpée de l'élément de connexion conducteur (21).

6. Feuille de connexion intelligente (2) selon la revendication 1, dans laquelle la zone affaiblie (214) est une partie amincie de l'élément de connexion conducteur (21).

7. Bloc-batterie, comprenant la feuille de connexion intelligente (2) selon l'une quelconque des revendications 1 à 6.

8. Bloc-batterie selon la revendication 7, dans lequel le bloc-batterie comprend une pluralité de feuilles de connexion intelligentes (2), dans lequel, lorsque des éléments de connexion conducteurs (21) de la pluralité de feuilles de connexion intelligentes (2) sont découpés par des appareils de découpe (22), un circuit haute tension du bloc-batterie est conçu pour être divisé en une pluralité de sections de circuits de répartition de tension, et une tension de chaque section de circuit de répartition de tension est inférieure à une tension de sécurité.

9. Véhicule, comprenant la feuille de connexion intelligente (2) selon l'une quelconque des revendications 1 à 6 ou le bloc-batterie selon la revendication 7 ou 8.
